Europäisches Patentamt

European Patent Office

Office européen des brevets

(19)

(11) Veröffentlichungsnummer: **0 154 326 B1**

(12) **EUROPÄISCHE PATENTSCHRIFT**

(45) Veröffentlichungstag der Patentschrift: **17.07.91**

(51) Int. Cl.⁵: **A01C 17/00, A01C 15/00**

(21) Anmeldenummer: **85102460.4**

(22) Anmeldetag: **05.03.85**

(54) **Maschine zum Ausbringen von körnigem oder pulverförmingem Material.**

(30) Priorität: **05.03.84 DE 3408055**

(43) Veröffentlichungstag der Anmeldung:
**11.09.85 Patentblatt 85/37**

(45) Bekanntmachung des Hinweises auf die
Patenterteilung:
**17.07.91 Patentblatt 91/29**

(84) Benannte Vertragsstaaten:
**AT BE CH DE FR GB IT LI NL SE**

(56) Entgegenhaltungen:
**DE-C- 1 214 461
FR-A- 2 308 296
FR-A- 2 351 571
FR-A- 2 373 474
GB-A- 2 064 283**

(73) Patentinhaber: **Krämer, Günter
Hurst, Bacherstrasse 16
W-5227 Windeck 1(DE)**

(72) Erfinder: **Krämer, Günter
Hurst, Bacherstrasse 16
W-5227 Windeck 1(DE)**

(74) Vertreter: **Fechner, Joachim, Dr.-Ing.
Im Broeltal 78
W-5202 Hennef 1(DE)**

**Beschreibung**

Die Erfindung betrifft eine Vorrichtung, bestehend aus einem Schlepper mit einem Oberlenker und einer über Kupplungselemente an den Schlepper angebauten Maschine zum Ausbringen von körnigem oder pulverförmigem Material, die einen Rahmen, einen von dem Rahmen gehaltenen trichterförmigen Behälter mit wenigstens einer Austrittsöffnung und einem schaufelartig ausgebildeten Rückwandoberteil und eine Verteileinrichtung unterhalb der Austrittsöffnung aufweist.

Die bekannten Streumaschinen der genannten Art unterscheiden sich im wesentlichen dadurch, daß der Behälter eine oder zwei Austrittsöffnungen mit dementsprechend einem oder zwei Zulauftrichtern aufweist, und durch die Art der Verteileinrichtung, die z.B. rotierende Streuteller, schwingende Pendelrohre oder Förderschnecken aufweisen kann. Das Befüllen des Behälters mit dem auszubringenden Material erfolgt entweder durch Einschaufeln von Hand oder Einkippen aus Säcken oder aus einem Kipper, wobei die Maschine auf dem Erdboden abgesetzt und ggfs. zur Anpassung an die Schütthöhe des Kippers um einen Winkel von weniger als 30° nach hinten gekippt wird. Schließlich kann die Maschine durch ein Silo beschickt werden. Die Befüllung von Hand ist arbeits- und zeitaufwendig. Die Beschickung aus einem Kipper bringt zwar für den Landwirt eine wesentliche Erleichterung, ist aber immer noch zeitraubend, da man zur Bedienung der Kipperklappe den Schlepper verlassen muß. Diese Art der Befüllung setzt zudem ein fließfähiges Material voraus; selbst dann müssen Restmengen oft von Hand aus dem Kipper entfernt werden. Die Beschickung der Streumaschine aus einem Silo setzt natürlich eine Silolagerung des Düngemittels voraus, die in vielen landwirtschaftlichen Betrieben nicht vorhanden ist.

Aus der FR-A-2 373 474 ist eine Maschine der eingangs genannten Art bekannt, die den trichterförmigen Behälter nach Art eines Schaufelladers bis in die Horizontallage der Behältervorderwand abkippen und dann zwecks Beladung in eine Düngemittelschüttung einfahren kann. Dabei erfolgt das hydraulische An- und Abkippen des Behälters durch zwei Kolben/Zylinder-Einheiten, die zwischen dem Oberteil des Rahmens und dem Unterteil des Behälters angebracht sind. Bei abgekipptem Behälter liegen die Zugrichtung der Kolben/Zylinder-Einheiten und die angelenkte Stützschiene des Behälters etwa in einer Richtung, so daß nur ein minimaler oder kein Kraftarm für das Ankippen des beladenen Behälters zur Verfügung steht. Da die Schwenkachse des Behälters ein beträchtliches Stück oberhalb des Erdbodens liegt, wird der in die Schüttung eingefahrene Behälter beim Ankippen zwangsläufig ein Stück in die Schüttung hineingedrückt, wodurch das Lastmoment noch vergrößert wird.

Aus der FR-A-2 308 296 ist eine Maschine zur Verteilung von körnigen oder pulverförmigen Düngemitteln bekannt, bei der der Trichterbehälter soweit nach hinten geneigt werden kann, daß im Behälter verbliebene Düngemittelreste nach Öffnung einer hinteren Behälterklappe leicht aus dem Behälter entfernt werden können. Der Trichterbehälter ist nicht schaufelartig ausgebildet und kann auch nicht soweit abgekippt werden, daß die Behälterrückwand parallel zum Erdboden liegt. Die verlängerten Rahmenkufen tragen eine Anhängerkupplung, die zur Abstützung des befüllten Behälters bei Kippvorgängen weder geeignet noch bestimmt ist.

Der Erfindung liegt die Aufgabe zugrunde, eine Maschine zum Ausbringen von körnigem oder pulverförmigem Material, insbesondere Düngemitteln zu schaffen, die durch Einfahren des abgekippten Materialbehälters in eine Materialschüttung und Ankippen des Behälters befüllt werden kann.

Diese Aufgabe wird bei der eingangs genannten Vorrichtung erfindungsgemäß dadurch gelöst, daß der Schlepper Unterlenker aufweist, die mit dem Rahmen verbunden sind, der Rahmen aus einem Rahmenoberteil und Kufen besteht, der Oberlenker einen Hydraulikzylinder aufweist und mit dem Rahmenoberteil verbunden ist und an den Kufen des Rahmens rückseitig wenigstens ein Stützfuß ausgebildet ist. Der Behälter der Streumaschine ist unabhängig von seiner übrigen Gestaltung zugleich als Schaufel ausgebildet und kann am Schlepper in die Schaufelposition gekippt werden. In dieser Position, in der das Rückwandoberteil etwa horizontal liegt, kann der Behälter durch Rückwärtsfahren des Schleppers in eine auf dem Boden liegende Materialschüttung hineingefahren werden. Dabei nimmt der schaufelförmig ausgebildete Behälter soviel Material auf, daß er nach dem Ankippen in die Betriebsposition vollständig befüllt ist. Für die Kippbarkeit genügt die Ausstattung des Oberlenkers mit einem einfach wirkenden Hydraulikzylinder. Die Ankippbewegung erfolgt durch Ölzulauf zum Zylinder, während die Abkippbewegung allein auf Grund des hinteren Übergewichts der Maschine erfolgt. Selbstverständlich kann der hydraulische Oberlenker auch mit einem doppelt wirkenden Zylinder ausgestattet sein, was von Vorteil sein kann, wenn z.B. ein teilweise gefüllter Behälter zwecks Entleerung gebremst abgekippt werden soll. Im Gegensatz zu allen anderen Beschickungsmöglichkeiten braucht der Landwirt bei der erfindungsgemäßen Vorrichtung den Fahrersitz nicht zu verlassen. Die Befüllung ist mit einem Minimum an Zeit und Arbeit möglich, und es bedarf zur Befüllung keiner zusätzlichen Einrichtungen. Wenn nach Beendigung der Materialausbringung noch eine Restmenge im Behälter verblieben ist, kann der Behälter leicht vollständig entleert werden. Durch Abkippen des Behälters bis in Bodenberührung rutscht die Restmenge nach hinten auf das schaufelartige Oberteil und kann aus diesem herausgeschoben oder -gefegt werden.

Nach einer Ausführungsform der Erfindung ist die Rückwand des Behälters unter Bildung des Schaufelbodens erhöht ausgebildet. Auf diese Weise ist eine ausreichende Schaufelfläche geschaffen, so daß nach dem Einfahren in die Schüttung und Ankippen des Behälters dieser vollständig gefüllt ist. Um den Verschleiß des Schaufelbodens zu verringern, kann an seiner Kante eine Verschleißschiene lösbar angebracht sein.

Vorzugsweise sind auch die Seitenwände des Behälters unter Bildung von Schaufelseitenwandungen erhöht ausgebildet. Auch dies hat den Zweck, eine maximale Materialmenge aufnehmen zu können und die Abrutschverluste beim Ankippen zu verringern. Schließlich wird das Fassungsvermögen des Behälters durch die Schaufelausbildung vergrößert.

Nach der bevorzugten Ausführungsform der Erfindung bilden der Schaufelboden mit der Behälterrückwand und ggfs. die Schaufelseitenwandungen mit den Behälterseitenwänden innenseitig einen stumpfen Winkel. Der Winkel liegt zweckmäßigerweise im Bereich von 140 bis 175°. Der Winkel zwischen dem Schaufelboden und der Behälterrückwand sollte so gewählt werden, daß nach dem Abkippen des Behälters in Bodenberührung der Schaufelboden flächig dem Boden aufliegt, so daß die Schüttung bis zum Boden aufgenommen werden kann.

Weiterhin ist bei der bevorzugten Ausführungsform der Vorrichtung vorgesehen, daß der Schaufelboden durch eine Zugstrebe mit einer das Kupplungselement für den Oberlenker tragenden, am Rahmen angebrachten Anbaulasche kraftschlüssig verbunden ist. Durch diese Abstützung wird der Schaufelboden, der besonders zu Anfang der Ankippbewegung eine maximale Last trägt, abgestützt und gegen Durchbiegung gesichert. Die Zugstrebe überträgt einen wesentlichen Teil der Zugkraft von dem Oberlenker und der Anbaulasche direkt, d.h. unter Umgehung des Rahmens und der übrigen Behälterwandung, auf den Schaufelboden, wodurch die Beanspruchung von Rahmen und Behälter verringert wird. Wichtig ist hierbei, daß das Kupplungselement für den Oberlenker genügend weit vorne (relativ zu den Kupplungselementen für die Unterlenker) angeordnet ist und die Anbaulasche demgemäß auszubilden ist, so daß die Position des Kupplungselements für den Oberlenker nach Abkippen des Behälters in die Schaufelposition eine ausreichende Hebellänge liefert und für das erforderliche maximale Ankippmoment keine zu große Zugkraft erforderlich ist.

Weiterhin ist zweckmäßigerweise bei einem Behälter mit zwei nebeneinander angeordneten Trichtern (Doppeltrichterbehälter) der Schaufelboden durch eine Versteifungsplatte mit dem First des dachförmigen Teils zwischen den beiden Austrittsöffnungen verbunden. Auch hierdurch wird der Schaufelboden versteift. Die plattenförmige Zugstrebe wie auch die Versteifungsplatte liegen zweckmäßigerweise in einer Ebene, die parallel zur Einfahrrichtung in die Schüttung ist, so daß sie dem Material beim Einfahren in die Schüttung den geringsten Widerstand bieten.

Zweckmäßigerweise weist der Rahmen ein als geschlossener Ring ausgebildetes, die Behälterrückwand unterstützendes Oberteil auf. Im Gegensatz zu den bekannten Konstruktionen wird auch die Rückwand des Behälters abgestützt. Dies ist von Bedeutung, weil es neben dem Schaufelboden die Behälterrückwand ist, die das Materialgewicht beim Ankippen aufnehmen muß.

Nach der bevorzugten Ausführungsform ist weiter vorgesehen, daß die Kippachse die durch die Kupplungselemente für den Anbau an die Unterlenker gehende Gerade ist. Zur Realisierung der Kippbarkeit bedarf es damit keiner zusätzlichen Anbauvorrichtung, sondern es wird die Schwenkbarkeit an der Kupplung ausgenutzt.

Die Verteileinrichtung kann ein um eine vertikale Achse schwingbares Streurohr sein, das mit einem Rohrgelenk ausgestattet ist, durch das ein Teil des Rohres oder das Streurohr als Einheit aufwärts unter die Rückwand des Behälters schwenkbar ist. Während der Kippung bei Maschinen mit Streutellern als Verteileinrichtungen keine Probleme bietet, kann das Streurohr einer Kippung der Maschine in die Schaufelposition im Wege stehen. Durch die Schwenkung unter die Behälterrückwand wird dieses Hindernis für die Dauer der Kippung beseitigt. Die Schwenkung des Streurohres kann direkt von Hand oder vom Fahrersitz aus durch hydraulische oder mechanische Fernbedienung (Seilzug) erfolgen. Nach einer anderen Ausführungsform ist das Streurohr durch Bajonettverschluß lösbar befestigt. Es kann dann vor Kippung der Maschine von Hand abgenommen und nach dem Ankippen wieder angebracht werden.

Die Erfindung wird nachfolgend an Hand der Zeichnung näher beschrieben. Es zeigen

Figur 1 eine Seitenansicht einer Ausführungsform der erfindungsgemäßen Maschine in der Betriebsposition;

Figur 2 eine Seitenansicht der Maschine nach Figur 1 in der Schaufelposition;

Figur 3 eine Rückansicht der Maschine nach den Figuren 1 und 2; und

Figur 4 eine perspektivische Darstellung des Doppeltrichter-Behälters der Maschine nach den Figuren 1 bis 3.

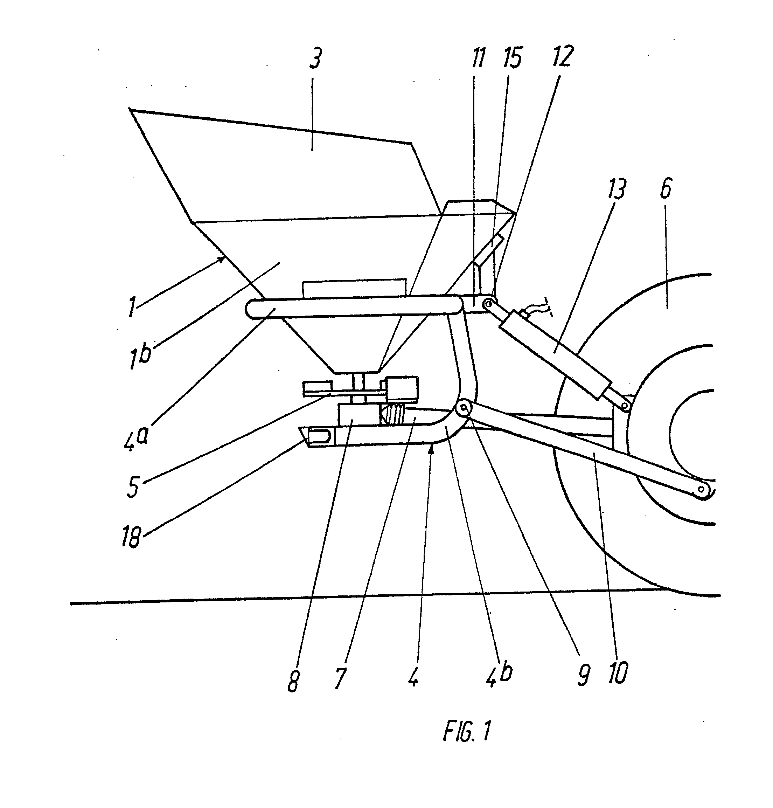

Nach den Figuren 1 bis 3 umfaßt die dargestellte Streumaschine einen Doppeltrichter-Behälter 1 mit einer Rückwand 1ª und zwei Seitenwänden 1ᵇ. Die Rückwand 1ª hat über ihre gesamte Breite eine als Schaufelboden 2 dienende Erhöhung; desgleichen haben die Seitenwände 1ᵇ des Behälters Erhöhungen, die als Schaufelseitenwandungen 3 anzusehen sind. Der Behälter 1 ist in einem Rahmen 4 befestigt, dessen Oberteil 4ª als geschlossener, dem Querschnitt des Behälters angepasster Ring ausgebildet ist. Unterhalb der Austrittsöffnungen 1ᶜ sind in bekannter Weise Streuteller 5 für die horizontale Verteilung des Düngemittels vorgesehen. Die Streuteller werden von der Zapfwelle des Schleppers 6 in bekannter Weise über eine Gelenkwelle 7 und ein Winkelgetriebe 8 angetrieben. An dem ringförmigen Rahmenoberteil 4ª sind zwei Kufen 4ᵇ angesetzt, die noch durch Streben (nicht dargestellt) mit dem Oberteil 4ª verbunden sind.

An den beiden Rahmenkufen 4ᵇ befinden sich Kupplungselemente 9, mit denen die Maschine 1-3,5,8 auf den Unterlenkern 10 des Schleppers 6 gelenkig gelagert ist. Am Rahmenoberteil 4ª ist vorderseitig eine nach vorne vorstehende Anbaulasche 11 mit dem Kupplungselement 12 angesetzt. Der Oberlenker 13 mit einfach wirkendem Hydraulikzylinder stellt die gelenkige Verbindung zwischen der Anbaulasche 11 und dem Schlepper 6 her.

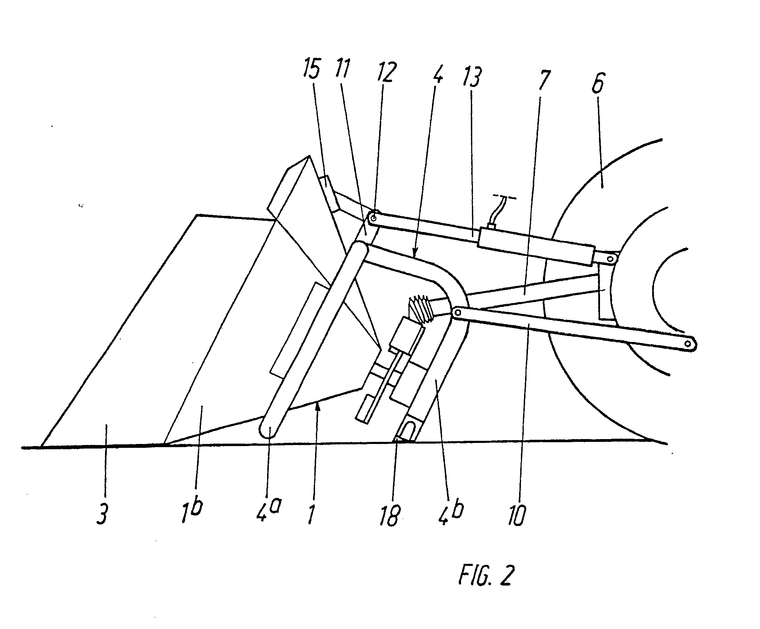

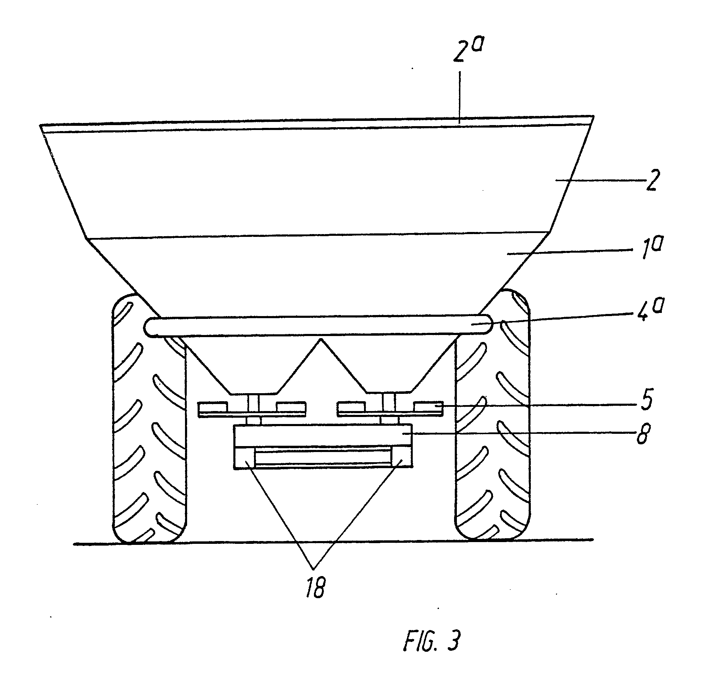

Durch Öffnen des zu dem hydraulischen Oberlenker 13 gehörenden Steuerventils (nicht dargestellt) kann das Hydraulikmittel aus dem Zylinder abfließen, wodurch die Maschine nach hinten in die in Figur 2 dargestellte Schaufelposition gekippt wird. Durch Rückwärtsfahren des Schleppers 6 mit der in die Schaufelposition abgekippten Maschine in eine Materialschüttung kann mit der Schaufel 2,3 und dem Behälter 1 eine ausreichende Materialmenge aufgenommen werden. Durch Zuführung des Hydraulikmittels in den Zylinder des Oberlenkers 13 wird die Maschine mit vollständig gefülltem Behälter 1 wieder in die in Figur 1 dargestellte Betriebsstellung zurückgekippt. Der Fahrer braucht hierbei seinen Sitz nicht zu verlassen und kann auf diese Weise eine Bodenschüttung restlos aufnehmen.

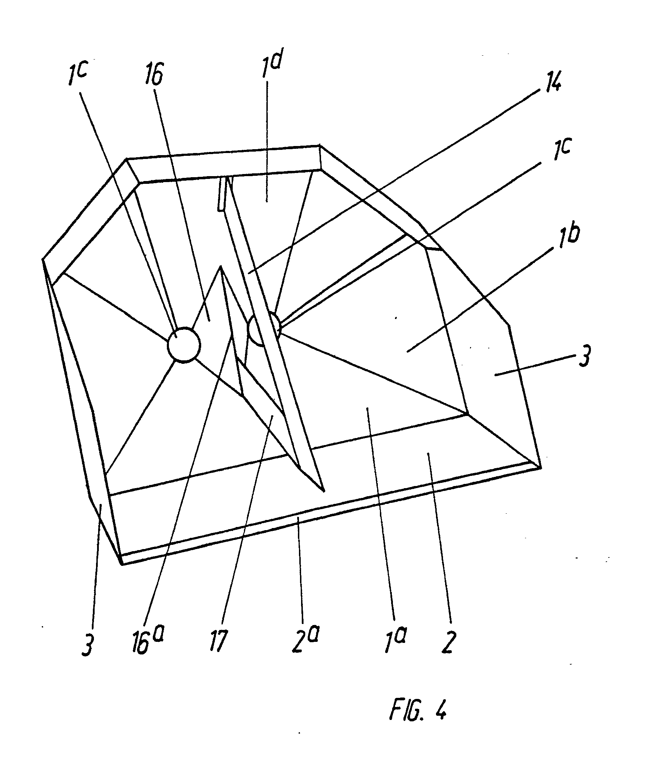

Aus Figur 3 ist ersichtlich, daß der Schaufelboden 2 eine auswechselbare Verschleißschiene 2ª trägt, die den Boden 2 vor Abnutzung schützt. Die Anbringung einer Verschleißschiene 2ª aus Stahl wird sich insbesondere dann empfehlen, wenn der Schaufelbehälter 1-3 aus Kunststoff besteht.

Aus Figur 4 ist ersichtlich, daß der Schaufelboden 2 durch eine Zugstrebe 14 mit der Vorderwand 1ᵈ und einer außenseitigen Lasche 15 verschraubt ist, die ihrerseits mit der Anbaulasche 11 kraftschlüssig verbunden ist. Durch die Zugstrebe 14 wird das zu Beginn des Ankippens auf dem Schaufelboden 2 lastende hohe Materialgewicht direkt von dem Oberlenker 13 gezogen, wodurch der Rahmen 4 und der Behälter 1 mit seiner Befestigung an dem Rahmenoberteil 4ª entlastet wird. Ferner ist in dem Behälter 1 zwischen dem First 16ª des dachförmigen Behälterteils 16 und der Zugstrebe 14 in Anlage an die Rückwand 1ª und den Schaufelboden 2 eine Versteifungsplatte 17 eingeschweißt, die ebenfalls zur Formstabilität des gefüllten Schaufelbehälters beim Ankippen beiträgt. Die Ebene der Zugstrebe 14 und der Versteifungsplatte 17 liegt in der Schubrichtung, so daß beide beim Einfahren in die Schüttung wenig Widerstand bieten.

Die Erfindung ist nicht auf die dargestellte Ausführungsform beschränkt. Sie ist insbesondere unabhängig von der bei der Maschine benutzten Verteileinrichtung und kann beispielsweise auch bei Maschinen mit einem Streuteller oder bei Pendelstreuern eingesetzt werden. Bei Pendelstreuern (vergl. DE-OS 24 46 106) ist das Streurohr oder ein Teil davon mit einem Gelenk zu versehen, so daß es in einer vertikalen Ebene schwenkbar ist und zur Beschickung der Maschine an die Behälterwand geschwenkt werden kann.

Wie aus den Figuren 1 bis 3 ersichtlich ist, tragen die Rahmenkufen 4ᵇ beiderseits der Hängerkupplung Stützfüße 18, mit denen sich die beladene Maschine beim Ankippen auf dem Erdboden abstützt.

Die Breite der Schaufel 2,3 ist zweckmäßigerweise so gewählt, daß Kipper in voller Breite in sie abgekippt werden können, sofern diese keine übermäßige Breite haben.

## Patentansprüche

1. Vorrichtung, bestehend aus einem Schlepper (6) mit einem Oberlenker (13) und einer über Kupplungselemente (9,12) an den Schlepper (6) angebauten Maschine zum Ausbringen von körnigem oder pulverförmigem Material, die einen Rahmen (4), einen von dem Rahmen (4) gehaltenen trichterförmigen Behälter (1) mit wenistens einer Austrittsöffnung (1c) und einem schaufelartig ausgebildeten Rückwandoberteil (2) und eine Verteileinrichtung (5) unterhalb der Austrittsöffnung (1c) aufweist, dadurch gekennzeichnet, daß der Schlepper Unterlenker (10) aufweist, die mit dem Rahmen (4) verbunden sind, der Rahmen (4) aus einem Rahmenoberteil (4a) und Kufen (4b) besteht, der Oberlenker (13) einen Hydraulikzylinder aufweist und mit dem Rahmenoberteil (4a) verbunden ist und an den Kufen (4b) des Rahmens (4) rückseitig wenigstens ein Stützfuß (18) ausgebildet ist.

2. Vorrichtung nach Anspruch 1, dadurch gekennzeichnet, daß die Rückwand (1a) des Behälters (1) unter Bildung des Schaufelbodens (2) erhöht ausgebildet ist.

3. Vorrichtung nach Anspruch 1 oder 2, dadurch gekennzeichnet, daß die Seitenwände (1b) des Behälters (1) unter Bildung der Schaufelseitenwandungen (3) erhöht ausgebildet sind.

4. Vorrichtung nach Anspruch 2 oder 3, dadurch gekennzeichnet, daß der Schaufelboden (2) mit der Behälterwand (1a) und, ggfs. die Schaufelseitenwandungen (3) mit den Behälterseitenwänden (1b), innenseitig einen stumpfen Winkel bilden.

5. Vorrichtung nach einem der Ansprüche 2 bis 4, dadurch gekennzeichnet, daß der Schaufelboden (2) durch eine Zugstrebe (14) mit einer das Kupplungselement (12) für den Oberlenker (13) tragenden, am Rahmen (4) angebrachten Anbaulasche (11) kraftschlüssig verbunden ist.

6. Vorrichtung nach einem der Ansprüche 2 bis 5, dadurch gekennzeichnet, daß bei einem Behälter (1) mit zwei nebeneinander angeordneten Trichtern der Schaufelboden (2) durch eine Versteifungsplatte (17) mit dem First (16a) des dachförmigen Teils (16) zwischen den beiden Austrittsöffnungen (1c) verbunden ist.

7. Vorrichtung nach einem der Ansprüche 1 bis 6, dadurch gekennzeichnet, daß der Rahmen (4) ein als geschlossener Ring ausgebildetes, die Behälterrückwand (1a) unterstützendes Oberteil (4a) aufweist.

8. Vorrichtung nach einem der Ansprüche 1 bis 7, dadurch gekennzeichnet, daß die Kippachse die durch die Kupplungselemente (9) für den Anbau an die Unterlenker (10) gehende Gerade ist.

## Claims

1. Device consisting of a tractor (6) having an upper guide rod (13), and a machine for distributing granular or powdery material, said machine being attached to the tractor (6) by means of coupling elements (9,12) and comprising a frame (4), a hopper (1) supported by the frame (4) and having at least one discharge orifice (1c) and a shovel-shaped upper part (2) of the rear wall, and a distribution facility (5) below said discharge orifice (1c), characterized in that the tractor comprises lower guide rods (10) connected to the frame (4), the frame (4) consists of an upper frame part (4a) and skids (4b), the upper guide rod (13) comprises a hydraulic cylinder and is connected to said upper frame part (4a), and at least one support leg (18) is formed at the rear end of said skids (4b) of the frame (4).

2. Device as claimed in claim 1, characterized in that the rear wall (1a) of the hopper (1) is elevated so that a shovel bottom (2) is formed.

3. Device as claimed in claim 1 or claim 2, characterized in that the side walls (1b) of the hopper (1) are elevated so that shovel side walls (3) are formed.

4. Device as claimed in claim 2 or claim 3, characterized in that an obtuse angle is formed inside between the shovel bottom (2) and the hopper wall (1a) and possibly between the shovel side walls (3) and the hopper side walls (1b).

5. Device as claimed in any one of the claims 2 to 4, characterized in that the shovel bottom (2) is coupled to an attachment flap (11) via a tie bar (14), said attachment flap being mounted to the frame (4) and supporting the coupling element (12) for the upper guide rod (13).

6. Device as claimed in any one of the claims 2 to 5, characterized in that with a hopper (1) having two funnels arranged side-by-side the shovel bottom (2) is connected to the ridge (16a) of the roof-shaped part (16) between the two discharge orifices (1c) by means of a stiffening plate (17).

7. Device as claimed in any one of the claims 1 to 6, characterized in that the frame (4) comprises an upper part (4a) which is formed as a closed ring and supports the hopper rear wall (1a).

8. Device as claimed in any one of the claims 1 to 7, characterized in that the axis of tilt is the straight line passing through the coupling elements (9) for the attachment to the lower guide rods (10).

## Revendications

1. Dispositif se composant d'un tracteur (6) avec une tige d'accouplement supérieure (13) et d'une machine à épandre des matériaux granuleux ou pulvérulents, montée au tracteur (6) par des éléments pour accoupler (9, 12), la machine comprenant un châssis (4), une trémie (1) avec au moins un orifice de sortie (1c) et une partie supérieure de sa paroi arrière (2) sous forme de pelle, la dite trémie etant supportée par le châssis (4), et un distributeur (5) au-dessous de l'orifice de sortie (1c), le dispositif est caractérisé en ce que le tracteur présente des tiges d'accouplement inférieures (10) assemblés avec le châssis (4), le châssis (4) se compose d'une partie supérieure (4a) et des patins (4b), la tige d'accouplement supérieure (13) comprend un vérin hydraulique et est assemblé avec la partie supérieure (4a) du châssis et à la derrière des patins (4b) du châssis (4) se trouve au moins un pied de support (18).

2. Dispositif selon la revendication 1, caractérisé en ce que la paroi arrière (1a) de la trémie (1) formant le fond de la pelle (2) est formée élevée.

3. Dispositif selon la revendication 1 ou 2, caractérisé en ce qu'en formant les parois latérales (3) de la pelle, les parois latérales (1b) de la trémie (1) sont formées élevées.

4. Dispositif selon revendication 2 ou 3, caractérisé en ce que le fond de la pelle (2) avec la paroi de la trémie (1a) et, le cas échéant, les parois latérales de la pelle (3) avec les parois latérales de la trémie (1b), forment un angle obtus à l'intérieur.

5. Dispositif selon l'une des revendications 2 à 4, caractérisé en ce que le fond de la pelle (2) est couplé par un étai de traction (14) à une éclisse de raccordement (11) fixée au châssis (4), qui porte l'élément pour accoupler (12) la tige d'accouplement supérieure (13).

6. Dispositif selon l'une des revendications 2 à 5, caractérisé par le fait qu'en regardant une trémie (1) avec deux entonnoirs, l'un à côté de l'autre, le fond de la pelle (2) est relié par un plateau de renforcement (17) au faîte (16a) de la partie (16) sous forme de toit entre les deux orifices de sortie (1c).

7. Dispositif selon l'une des revendications 1 à 6, caractérisé en ce que le châssis (4) présente une partie supérieure (4a) sous forme d'une bague serrée qui supporte la paroi arrière (1a) de la trémie.

8. Dispositif selon l'une des revendications 1 à 7, caractérisé en ce que l'essieu à bascule est la ligne droite qui mène par les éléments (9) pour accoupler les tiges d'accouplement inférieures (10).

FIG. 1

FIG. 2

FIG. 3

FIG. 4